# EUROPEAN PATENT SPECIFICATION

(11) **EP 0 477 288 B1**
(45) Date of publication and mention of the grant of the patent: **12.02.1997**
(21) Application number: 90910199.0
(22) Date of filing: 07.06.1990
(51) Int. Cl.: H04Q 7/00

(54) **PAGING SYSTEM WITH ENERGY EFFICIENT STATION LOCATION**
RUFSYSTEM MIT ENERGIESPARENDER STATIONSORTUNG
SYSTEME DE TELEAPPEL A REPERAGE DE STATIONS A FAIBLE CONSOMMATION EN ENERGIE

(30) Priority: 16.06.1989 US 367014
(43) Date of publication of application: 01.04.1992
(73) Proprietor: SEIKO COMMUNICATIONS HOLDING N.V., Curacao (AN)
(72) Inventor: PEEK, William, H., Beaverton, OR 97007 (US); GASKILL, Garold, B., Tualatin, OR 97062 (US)
(74) Representative: Cross, Rupert Edward Blount
(86) International application number: US9003228
(87) International publication number: WO9016134

(56) References cited:
- US-A- 4 247 908
- US-A- 4 419 765
- US-A- 4 644 347
- US-A- 4 888 815

## Description

The present invention relates to paging systems, and more particularly relates to techniques for limiting the battery drain on a paging receiver as it searches for signals carrying paging data.

Paging receivers sometimes include the capability to scan a number of frequency channels to locate a channel carrying the desired paging data. In simple pagers, the receiver simply tunes every channel in the paging spectrum until it finds a channel carrying the desired paging data. In more advanced systems, each paging transmitter may broadcast a list of alternative paging channels that are used in the area surrounding the transmitter. On finding one such station, a paging receiver is provided a small local list of other stations that it can examine for data if the original station is lost, obviating the need to scan the entire frequency spectrum. Such a system is disclosed in EP-A-0477279, filed simultaneously herewith.

The scanning process is energy intensive and reduces the battery life available for the more productive task of receiving pages. If a pager that relies on a local channel list is moved from the geographical area to which the list relates, the pager may exhaust its battery vainly searching for paging signals where there are none.

US-A-4419765 discloses a scanning receiver that can scan channels containing both weak and strong signals. The receiver is able to more quickly lock onto and receive information from the strong signals than from the weak signals and thus it is able to more rapidly make a determination whether the strong signals contain the desired data than it can with the weak signals. The system is therefore able to linger longer on the weak signals in order to detect the desired information and is able to pass over strong signals that omit the desired information relatively more quickly. This system suffers from the disadvantage that all channels must be examined: there is no local channel list.

US-A-4247908 discloses a data transmission system in which a control unit polls a variety of active data terminals in sequence, along with some inactive data terminals. All active units are polled for data in each polling sequence whilst only some inactive units are polled for data in each polling sequence. This system is not appropriate for a paging system since there are not active and inactive units.

US-A-4644347 discloses a local/national paging system in which a paging receiver can tune to either a local or a national frequency to receive paging signals. The receiver energises and monitors one of the two frequencies intermittently and if during a predetermined time interval the receiver does not detect a special code three consecutive times, the receiver switches at the end of the predetermined time interval to the other channel. This process is carried out repeatedly. This system does not provide a solution to the problem of locating a channel carrying the desired paging data when a paging signal cannot be reliably received on the current frequency to which the receiver is tuned.

The present invention provides a method of operating a radio pager in a system where the same message is broadcast on a plurality of frequencies, the method comprising the steps of providing the pager with a local list of paging frequencies on which said message is broadcast; periodically listening for a paging signal on a first of said frequencies; if a paging signal cannot be reliably received on the first frequency, then scanning among the frequencies in the local list to find a paging signal, said scanning occurring at a first rate which is a faster rate than the periodic listening rate; if the scanning is unable to locate a paging signal within a predetermined interval of time, then slow scanning among the frequencies on the local list to find a paging signal, said slow scanning occurring at a slower rate than said first rate; and if said slow scanning is unable to locate a paging signal within a predetermined interval of time, then searching among a larger list of frequencies to find a paging signal, said searching occurring at a rate slower than said first rate.

The present invention also provides a radio pager comprising: a frequency agile receiver; means for periodically listening for a paging signal on a first frequency; characterised by means for storing a local list of paging frequencies; and means for tuning said receiver to perform a first scan through said local list at a first rate which is faster than the periodic listening rate if a paging signal cannot be reliably received on said first frequency; said means for tuning said receiver being further operable to perform a second scan through said local list at a second rate slower than said first rate if a paging signal has not been located within a predetermined time by said first scan; and said means for tuning said receiver being still further operable to scan among a larger list of frequencies to find a paging signal at a rate slower than said first rate if said second scan through said local list is unable to locate a paging signal within a predetermined time.

Thus the method can search for a station carrying paging data without unduly draining the paging receiver battery. If a station to which the receiver is presently tuned becomes unreliable, the pager scans among channels listed in a local channel list. If no paging data is received on these channels, the scanning among the local list channels proceeds for a further interval at a slower rate. After it appears that paging data will not be found on channels listed in the local list, the pager begins a full spectrum search at a slower rate until it again finds a channel carrying paging data. By this arrangement, battery power is expended at a rate roughly in accordance with the likelihood of finding a paging station.

Embodiments of the present invention will now be described with reference to the accompanying drawings, in which:

Fig. 1 is a schematic block diagram illustrating a paging system that may use the present invention.

Fig. 2 is a schematic block diagram illustrating a wristwatch paging receiver used in the system of Fig. 1.

Fig. 3 is a block diagram illustrating the partial contents of a microprocessor memory used in the paging receiver of Fig. 2.

Fig. 4 is a flow chart illustrating a station searching routine stored in the memory of Fig. 3.

For expository convenience, an embodiment of the present invention will be illustrated with reference to a paging system (the "Gaskill" system) described in U.S. Patent 4,713,808.

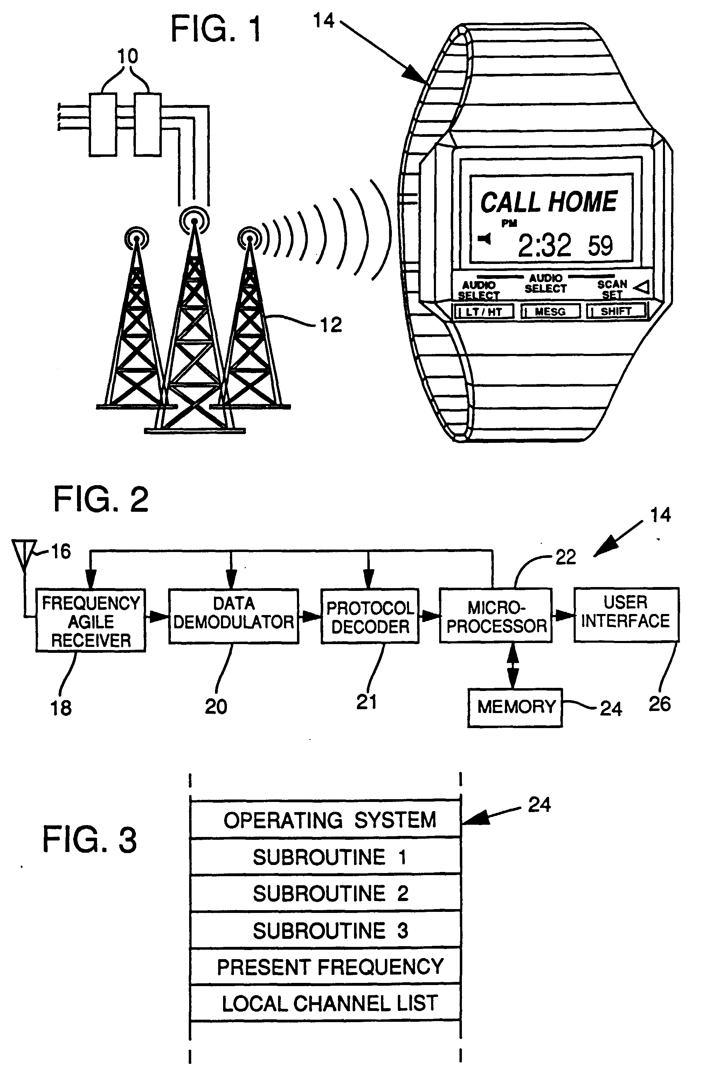

As shown in Fig. 1, the Gaskill system includes clearinghouses 10, broadcasting facilities 12 and wristwatch paging receivers 14. The clearinghouses 10 are fully automated centralized facilities which accept messages, validate customer identification, determine message destinations and route messages to the appropriate broadcast facilities for transmission. Callers to the system dial a local clearinghouse telephone number and hear voice prompts that guide them through a simple process for sending messages.

The broadcast facilities 12 are typically conventional FM broadcast stations that carry paging data on subcarriers of their signals. Multiple stations are used for transmission in a given area. Diversity of signals combined with repeated transmission insures the paging subscribers receive their messages with a high degree of reliability.

The wristwatch paging receivers 14 are worn by the customers and receive the paging messages broadcast by the broadcast facilities. A block diagram of such a receiver is shown in Fig. 2. The receiver basically includes an antenna 16, a frequency agile receiver 18, a data demodulator 20, a protocol decoder 21, a microprocessor 22 (with associated memory 24) and a user interface 26. Memory 24 contains various data and programs relating to operation of the watch, such as a subroutine for finding a new station, a subroutine for obtaining a local channel list, a datum indicative of the frequency to which the watch is presently tuned, and a local channel list. Fig. 3 illustrates some of the contents of this memory 24.

To review operation of the receiver briefly, antenna 16 receives radio frequency signals in the desired reception band (here 88 to 108 MHz) and couples them to the frequency agile receiver 18. The frequency agile receiver 18 processes the RF signals from the antenna and produces baseband output signals corresponding to a desired FM station within the reception band -- typically an FM signal carrying the paging data on an SCA Subcarrier thereof. This SCA paging data is detected by the data demodulator 20, decoded by the protocol decoder 21 and is provided to the microprocessor 22 for processing. The microprocessor 22 drives the user interface 26 to alert the user of paging messages.

As described in greater detail in EP-A-0477279, local channel lists are transmitted to the pagers and provide a list of alternative channels to which the pager can refer if the channel presently being received becomes unreliable. For background, it may be helpful to review operation of that system.

The paging signals received by the receiver 14 are formatted as sequences of packets. The first three packets of each sequence are termed "control" packets. The first of the control packets is termed the "control 0" packet and contains the date and time and the first entry of the channel list. The second packet is termed the "control 1" packet and contains the other entries in the channel list. The third packet is a spare. These three control packets are followed by 1024 "data" packets in which the paging data is transmitted. Subsequent sequences are similarly formatted. A new sequence (or "subframe") of 1027 packets is transmitted every 14.0625 seconds.

When a paging receiver is reset or newly-energized, it first begins a spectrum wide scan for a station carrying the paging data. When such a station is found, the receiver decodes the first and second packets and stores the local channel list contained therein into microprocessor memory 24. Thereafter, the receiver continues to operate on the original channel until there is a failure in reception, such as receipt of a packet with uncorrectable errors. When such an event occurs, the receiver tunes other channels in the local list until good data is again received.

It will be recognized that if the receiver is moved to a new geographical area, the local channel list stored in its memory 24 may not reflect the paging channels used in the new area. When the station presently tuned becomes unreliable, a search through the channels listed in the local channel list may be unavailing. Unless action is taken by the user to intervene and reset the watch to begin a spectrum-wide search for a new satisfactory paging channel, the receiver battery may become drained.

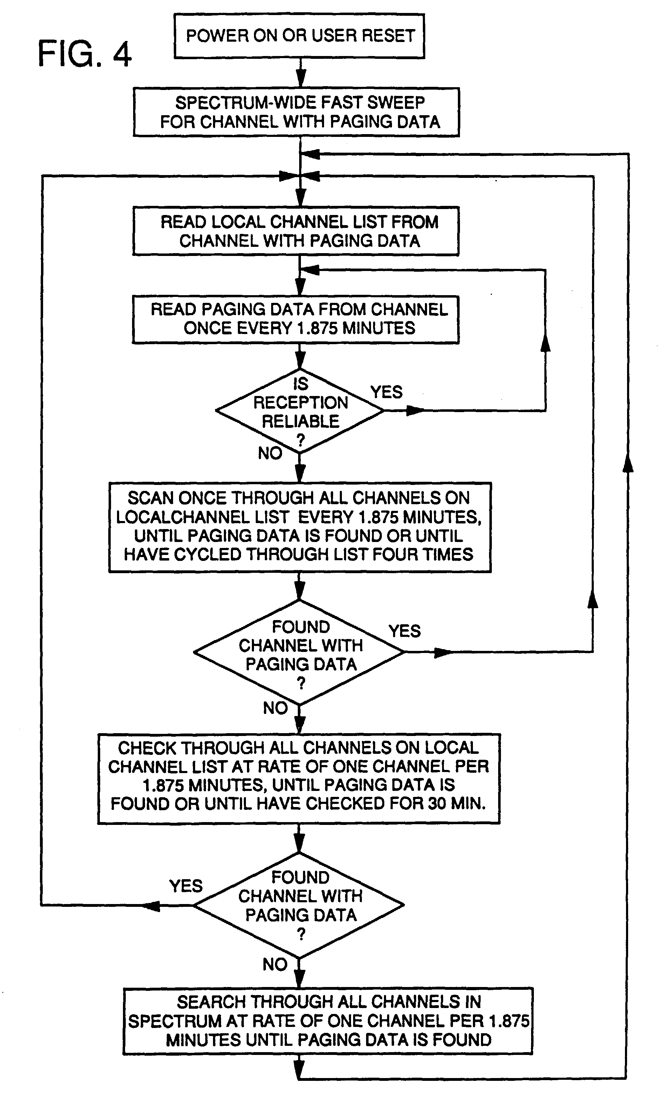

According to an aspect of the present invention, the search procedure of the receiver follows the steps illustrated in the flow chart of Fig. 4. On power-on (or on activation of a reset button by the user), the microprocessor 22 causes the frequency agile receiver 18 to begin a fast sweep of the entire FM broadcast spectrum, 88.1 to 107.9 MHz in increments of 0.2 MHz, until a channel with paging data is located. When such a channel is located, the receiver reads the local channel list transmitted in the control 0 and control 1 packets thereof and stores the list in memory 24. Thereafter, the receiver momentarily energizes once every 1.875 minutes to listen for paging messages directed to the receiver's user. As long as reception on this channel continues to be reliable, the receiver stays in this low energy mode of operation, simply listening periodically for paging messages.

If the user moves the receiver 14 to a new location in which reception is impaired, the receiver will detect the loss of paging data utilizing a CRC error. This error prompts the microprocessor 22 to begin a scan through all the channels listed in the local channel list for an alternative source of paging signals. The transmission on these channels are generally all time-staggered relative to one another, so the receiver can tune to the first alternative channel for a given frame of information and, if unsuccessful, can tune to the next alternative channel, and so forth, all within the frame period of 1.875 minutes. In the illustrated embodiment, this scan continues for four complete cycles through the local channel list (i.e. a maximum period of 7.5 minutes) looking for paging data.

If the receiver's loss of the original signal was caused by some transitory effect, such as a momentary incident of multipath while the user drove between buildings in a downtown area, the receiver quickly resumes reception of paging signals, generally without loss of a single frame of data since each channel transmits each frame in time-staggered relation. If, however, the receiver has not reacquired a paging signal within this 7.5 minute scan time, the microprocessor presumes the signal loss is not of momentary duration and ceases the receiver's relatively high energy scan operation. (If there are seven stations in the local channel list, the energization of the receiver seven times every 1.875 minutes during this scanning operation consumes power at a rate of seven times that consumed during normal operation, in which the receiver is energized only once every 1.875 minutes.)

If the microprocessor concludes that the loss of signal is not merely transitory, it may optionally continue its checking through the local channel list, but at a slower rate, such as one channel every 1.875 minutes. This operation consumes power at the same rate as the normal receiving mode of operation, yet concentrates the search among the channels most likely to be carrying paging signals. In the illustrated embodiment, this checking mode continues for 30 minutes.

If no paging signal is located using the above procedures, the microprocessor then instructs the frequency agile receiver to institute a spectrum-wide search. This search is desirably conducted at a relatively slow rate, such as one channel every 1.875 minutes, to conserve battery power. If desired, the microprocessor can be programmed to begin this mode of operation with one fast sweep through the spectrum, and thereafter continue the search at the more relaxed pace. This low energy search continues until a paging signal is finally found.

By the foregoing arrangement, a paging receiver is able to quickly recover from transitory conditions that render a particular transmission unreliable simply by switching to another channel listed in a local channel list. If a signal failure cannot be quickly cured by resort to one of these other channels, the receiver reduces battery drain by checking among the listed channels more slowly. If this limited search continues to prove unavailing, the receiver widens the search to encompass the entire paging spectrum but operates at a rate that consumes little battery energy. Thus, the battery energy is expended where it is most likely to do the most good, with a high energy search among the most likely channels and a progressively lower energy search as the likelihood of quickly finding a station diminishes.

## Claims

1. A method of operating a radio pager in a system where the same message is broadcast on a plurality of frequencies, the method comprising the steps of:
providing the pager (14) with a local list of paging frequencies on which said message is broadcast;
periodically listening for a paging signal on a first of said frequencies;
if a paging signal cannot be reliably received on the first frequency, then scanning among the frequencies in the local list to find a paging signal, said scanning occurring at a first rate which is a faster rate than the periodic listening rate;
if the scanning is unable to locate a paging signal within a predetermined interval of time, then slow scanning among the frequencies on the local list to find a paging signal, said slow scanning occurring at a slower rate than said first rate; and
if said slow scanning is unable to locate a paging signal within a predetermined interval of time, then searching among a larger list of frequencies to find a paging signal, said searching occurring at a rate slower than said first rate.

2. The method of claim 2 in which said slow scanning rate equals the periodic listening rate.

3. The method of Claim 1 or Claim 2 in which the searching rate equals the periodic listening rate.

4. The method of any one of claims 1 to 3 wherein the step of providing the pager (14) with a local list includes the steps of receiving a broadcast list of local paging channels, and storing said local list in a memory.

5. The method of any one of Claim 1 to 4 including the initial step of carrying out a spectrum wide scan when said pager (14) is first activated to locate said first of said frequencies.

6. A radio pager comprising:
a frequency agile receiver (18);
means (24) for periodically listening for a paging signal on a first frequency;
characterised by:
means (24) for storing a local list of paging frequencies;
means (22) for tuning said receiver (18) to perform a first scan through said local list at a first rate which is faster than the periodic listening rate if a paging signal cannot be reliably received on said first frequency;
in that said means (22) for tuning said receiver (18) being further operable to perform a second scan through said local list at a second rate slower than said first rate if a paging signal has not been located within a predetermined time by said first scan; and
in that said means (22) for tuning said receiver (18) being still further operable to scan among a larger list of frequencies to find a paging signal at a rate slower than said first rate if said second scan through said local list is unable to locate a paging signal within a predetermined time.

7. The radio pager of Claim 6 wherein said means (22) for tuning said receiver (18) is operable to carry out said second scan at a second rate equal to the periodic listening rate.

8. The radio pager of Claim 6 or Claim 7 wherein said means (22) for tuning said receiver (18) is operable to carry out said scan among said larger list at a rate equal to the periodic listening rate.

9. The radio pager of any one of Claims 6 to 8 wherein said receiver (18) is operable to receive a broadcast list of local paging channels for storage by said means (24) for storing.

10. The radio pager of any one of Claims 6 to 9 wherein said means (22) for tuning said receiver (18) is operable to initially carry out a spectrum wide scan when said pager (14) is first activated to locate said first frequency.

## Patentansprüche

1. Verfahren zum Betreiben eines Funkrufempfängers in einem System, bei dem die gleiche Mitteilung auf einer Mehrzahl von Frequenzen gesendet wird, das Verfahren umfassend die Schritte:
Versorgen des Funkrufempfängers (14) mit einer lokalen Liste von Funkruffrequenzen, auf denen die Mitteilung gesendet wird;
periodisches Hören nach einem Funkrufsignal auf einer ersten der Frequenzen;
falls ein Funkrufsignal auf der ersten Frequenz nicht zuverlässig empfangen werden kann, dann Suchen unter den Frequenzen in der lokalen Liste, um ein Funkrufsignal zu finden, wobei die Suche mit einer ersten Rate geschieht, die eine schnellere Rate als die Rate periodischen Hörens ist;
falls die Suche außerstande ist, ein Funkrufsignal innerhalb eines vorbestimmten Zeitintervalls zu ermitteln, dann langsames Suchen unter den Frequenzen auf der lokalen Liste, um ein Funkrufsignal zu finden, wobei die langsame Suche mit einer langsameren Rate als die erste Rate geschieht; und
falls die langsame Suche außerstande ist, ein Funkrufsignal innerhalb eines vorbestimmten Zeitintervalls zu ermitteln, dann Suchen unter einer größeren Liste von Frequenzen, um ein Funkrufsignal zu finden, wobei die Suche mit einer langsameren Rate als die erste Rate geschieht.

2. Verfahren nach Anspruch 1, bei dem die Rate langsamen Suchens gleich der Rate periodischen Hörens ist.

3. Verfahren nach Anspruch 1 oder 2, bei dem die Suchrate gleich der Rate periodischen Hörens ist.

4. Verfahren nach einem der Ansprüche 1 bis 3, bei dem der Schritt des Versorgens des Funkrufempfängers (14) mit einer lokalen Liste die Schritte des Empfangens einer Sendeliste von lokalen Funkrufkanälen und des Speicherns der lokalen Liste in einem Speicher umfaßt.

5. Verfahren nach einem der Ansprüche 1 bis 4, umfassend den anfänglichen Schritt des Durchführens einer über das Spektrum ausgedehnten Suche, wenn der Funkrufempfänger (14) erstmalig aktiviert wird, zum Ermitteln der ersten der Frequenzen.

6. Funkrufempfänger umfassend:
einen frequenzagilen Empfänger (18),
Mittel (24) zum periodischen Hören nach einem Funkrufsignal auf einer ersten Frequenz;
**gekennzeichnet durch:**
Mittel (24) zum Speichern einer lokalen Liste von Funkruffrequenzen;
Mittel (22) zum Abstimmen des Empfängers (18), um - wenn ein Funkrufsignal auf der ersten Frequenz nicht zuverlässig empfangen werden kann - eine erste Suche durch die lokale Liste mit einer ersten Rate durchzuführen, die schneller als die Rate periodischen Hörens ist;
wobei das Mittel (22) zum Abstimmen des Empfängers (18) weiterhin betreibbar ist, eine zweite Suche durch die lokale Liste mit einer zweiten Rate durchzuführen, falls kein Funkrufsignal innerhalb einer vorbestimmten Zeit durch die erste Suche ermittelt wurde, wobei die zweite Rate langsamer als die erste Rate ist; und
wobei das Mittel (22) zum Abstimmen des Empfängers (18) ferner noch betreibbar ist, in einer größeren Listen von Frequenzen mit einer langsameren Rate als die erste Rate zu suchen, um ein Funkrufsignal zu finden, wenn die zweite Suche durch die lokale Liste außerstande ist, ein Funkrufsignal innerhalb einer vorbestimmten Zeit zu ermitteln.

7. Funkrufempfänger nach Anspruch 6, bei dem das Mittel (22) zum Abstimmen des Empfängers (18) betreibbar ist, die zweite Suche mit einer zweiten Rate durchzuführen, die gleich der Rate periodischen Hörens ist.

8. Funkrufempfänger nach Anspruch 6 oder 7, bei dem das Mittel (22) zum Abstimmen des Empfängers (18) betreibbar ist, die Suche in der größeren Liste mit einer Rate durchzuführen, die gleich der Rate periodischen Hörens ist.

9. Funkrufempfänger nach einem der Ansprüche 6 bis 8, bei dem der Empfänger (18) betreibbar ist, eine Sendeliste lokaler Funkrufkanäle zu empfangen zur Speicherung durch das Mittel (24) zum Speichern.

10. Funkrufempfänger nach einem der Ansprüche 6 bis 9, bei dem das Mittel (22) zum Abstimmen des Empfängers (18) betreibbar ist, anfänglich eine über das Spektrum ausgedehnte Suche durchzuführen, wenn der Funkrufempfänger (14) erstmalig aktiviert wird, um die erste Frequenz zu ermitteln.

## Revendications

1. Procédé pour faire fonctionner un récepteur d'appel de personnes dans un système dans lequel un même message est diffusé sur un ensemble de fréquences, le procédé comprenant les étapes qui consistent :
à munir le récepteur (14) d'appel de personnes d'une liste locale de fréquences d'appel sur lesquelles ledit message est diffusé ;
à effectuer une écoute périodique dans l'attente d'un signal d'appel de personnes sur une première desdites fréquences ;
si un signal d'appel de personnes ne peut pas être reçu de façon fiable sur la première fréquence, à effectuer alors un balayage parmi les fréquences de la liste locale pour trouver un signal d'appel de personnes, ledit balayage se produisant à une première cadence qui est une cadence plus rapide que la cadence d'écoute périodique ;
si le balayage est incapable de localiser un signal d'appel de personnes en moins d'un intervalle de temps prédéterminé, à ralentir le balayage parmi les fréquences de la liste locale pour trouver un signal d'appel de personnes, ledit balayage lent se produisant à une cadence plus lente que ladite première cadence ; et
si ledit balayage lent est incapable de localiser un signal d'appel de personnes en moins d'un intervalle de temps prédéterminé, à effectuer alors une recherche parmi une liste de fréquences plus grande pour trouver un signal d'appel de personnes, ladite recherche s'effectuant à une cadence plus lente que ladite première cadence.

2. Procédé selon la revendication 1, dans lequel ladite cadence de balayage lente est égale à la cadence d'écoute périodique.

3. Procédé selon la revendication 1 ou 2, dans lequel la cadence de recherche est égale à la cadence d'écoute périodique.

4. Procédé selon l'une quelconque des revendications 1 à 3, dans lequel l'étape consistant à munir le récepteur (14) d'appel de personnes d'une liste locale comprend les étapes qui consistent à recevoir une liste de diffusion de canaux d'appel de personnes locaux, et à stocker ladite liste locale dans une mémoire.

5. Procédé selon l'une quelconque des revendications 1 à 4, comprenant l'étape initiale qui consiste à effectuer un balayage du spectre entier lorsque ledit récepteur (14) d'appel de personnes est activé la première fois pour localiser ladite première desdites fréquences.

6. Dispositif d'appel de personnes comprenant :
un récepteur (18) agile en fréquence ;
des moyens (24) d'écoute périodique en attente de la réception d'un signal d'appel de personnes sur une première fréquence ;
caractérisé par :
des moyens (24) destinés à stocker une liste locale de fréquences d'appel de personnes ;
des moyens (22) destinés à accorder ledit récepteur (18) afin qu'il effectue un premier balayage de ladite liste locale à une première cadence qui est plus rapide que la cadence d'écoute périodique si un signal d'appel de personnes ne peut pas être reçu de façon fiable sur ladite première fréquence ;
lesdits moyens (22) destinés à accorder ledit récepteur (18) pouvant en outre être mis en fonctionnement pour effectuer un second balayage de ladite liste locale à une seconde cadence plus lente que ladite première cadence, si un signal d'appel de personnes n'a pas été localisé en moins d'un temps prédéterminé par ledit premier balayage ; et
lesdits moyens (22) destinés à accorder ledit récepteur (18) pouvant également en outre être mis en fonctionnement pour effectuer un balayage parmi une liste de fréquences plus grande pour trouver un signal d'appel de personnes à une cadence plus lente que ladite première cadence si ledit second balayage de ladite liste locale est incapable de localiser un signal d'appel de personnes en moins d'un temps prédéterminé.

7. Récepteur d'appel de personnes selon la revendication 6, dans lequel lesdits moyens (22) destinés à accorder ledit récepteur (18) peuvent être mis en fonctionnement pour effectuer ledit second balayage à une seconde cadence égale à la cadence d'écoute périodique.

8. Récepteur d'appel de personnes selon la revendication 6 ou 7, dans lequel lesdits moyens (22) destinés à accorder ledit récepteur (18) peuvent être mis en fonctionnement pour effectuer ledit balayage dans ladite liste plus grande à une cadence égale à la cadence d'écoute périodique.

9. Récepteur d'appel de personnes selon l'une quelconque des revendications 6 à 8, dans lequel ledit récepteur (18) peut être mis en fonctionnement pour recevoir une liste de diffusion de canaux d'appel de personnes locaux afin qu'elle soit stockée par lesdits moyens (24) de stockage.

10. Récepteur d'appel de personnes selon l'une quelconque des revendications 6 à 9, dans lequel lesdits moyens (22) destinés à accorder ledit récepteur (18) peuvent être mis en fonctionnement pour effectuer initialement un balayage du spectre entier lorsque ledit récepteur (14) d'appel de personnes est activé la première fois pour localiser ladite première fréquence.
